# FASCICULE DE BREVET EUROPEEN

(11) **EP 1 842 389 B1**
(45) Date de publication et mention de la délivrance du brevet: **06.08.2008**
(21) Numéro de dépôt: 06709161.1
(22) Date de dépôt: 24.01.2006
(51) Int. Cl.: H04Q 7/38, H04L 12/56, H04L 29/06

(54) **Procédé, dispositif et programme de détection d'usurpation d'adresse dans un réseau sans fil**
Verfahren, Vorrichtung und Programm zur Detektion con IP-Spoofing in einem drahtlosen Nertzwerk
Method, device and programme for detecting IP spoofing in a wireless network

(30) Priorité: 26.01.2005 FR 0500798
(43) Date de publication de la demande: 10.10.2007
(73) Titulaire: France Télécom, 75015 Paris (FR)
(72) Inventeur: BUTTI, Laurent, F-92130 Issy les Moulineaux (FR); DUFFAU, Roland, F-75015 Paris (FR); VEYSSET, Franck, F-92130 Issy les Moulineaux (FR)
(74) Mandataire: Cabinet Plasseraud
(86) Numéro de dépôt international: PCT/FR2006/000162
(87) Numéro de publication internationale: WO 2006/079710

(56) Documents cités:
- WO-A-03/093951
- DE-A1- 10 053 746
- US-A1- 2004 199 535

## Description

La présente invention concerne les technologies d'accès sans fil à des réseaux de télécommunications. Elle s'applique notamment aux technologies de type IEEE 802.11 normalisées par l'Institute of Electrical and Electronics Engineers (IEEE). Les technologies IEEE 802.11 sont très utilisées dans les réseaux d'entreprise, résidentiels ainsi que dans les zones d'usage intensif ("hot spots"). Plus particulièrement, l'invention se rapporte au piratage de réseaux sans fil par usurpation d'adresse de point d'accès.

Par le terme "trame", on désigne ici un ensemble de données formant un bloc transmis dans un réseau et renfermant des données utiles et des informations de service, généralement situées dans une zone d'en-tête du bloc. Selon le contexte, une trame peut être qualifiée de paquet de données, de datagramme, de bloc de données, ou autre expression de ce type.

Avec le succès et la démocratisation des technologies d'accès sans fil, des techniques de piratage ou d'attaque sont apparues.

Actuellement, un des risques les plus importants pour ce type de réseaux est l'attaque par point d'accès illégitime, qui consiste à créer un faux point d'accès en usurpant complètement les caractéristiques, notamment l'adresse de couche MAC ("Medium Access Control"), d'un point d'accès légitime, contrôlé par l'administrateur du réseau sans fil. Les faux points d'accès n'usurpant pas une adresse MAC d'un point d'accès légitime sont relativement faciles à détecter par simple vérification d'adresse MAC.

Le point d'accès est un élément primordial de la communication entre un client et un réseau. De ce fait, c'est un point critique, et donc intéressant pour les attaquants. Des attaques mettant en oeuvre de faux points d'accès sont apparues avec pour objectifs:
- de récupérer des identifiants de connexion pour des utilisateurs qui sont authentifiés au moyen de "portails captifs" en se faisant passer pour un point d'accès légitime afin d'intercepter des données d'identification telles que les identifiants de connexion;
- d'intercepter des communications en réalisant une attaque de type "man in the middle", c'est-à-dire en simulant le comportement d'un point d'accès légitime vis-à-vis de l'utilisateur sans fil et celui d'un utilisateur sans fil vis-à-vis du point d'accès légitime afin d'intercepter toutes les communications; et
- d'ouvrir tout un réseau d'entreprise en laissant un point d'accès directement connecté au réseau de l'entreprise en mode ouvert, c'est-à-dire sans aucune authentification ni chiffrement de la vole radio, ce point d'accès acceptant par défaut toute demande de connexion.

Ces attaques sont difficilement détectables quand elles mettent en oeuvre une technique d'usurpation d'adresse MAC. Il est alors plus difficile de distinguer deux équipements différents de la même catégorie émettant à partir d'une même adresse MAC. L'arrivée des nouveaux standards plus sécurisés (IEEE 802.11i) n'empêchera pas l'utilisation de points d'accès illégitimes car l'intérêt pour l'attaquant sera toujours présent.

Il existe donc un besoin pour un procédé de détection d'usurpation d'adresse MAC de point d'accès.

Une technique connue de détection d'usurpation d'adresse MAC repose sur l'analyse du champ de numéro de séquence ("Sequence Number") des trames IEEE 802.11. Ces numéros de séquence, gérés à bas niveau dans la carte radio, sont obligatoirement Incrémentés d'une unité à chaque paquet émis. Ceci permet de repérer des variations importantes entre plusieurs paquets successifs émis par une même adresse MAC. En comparant ces variations à des seuils prédéfinis, on peut détecter des anomalies dans les paquets apparaissant en provenance d'une adresse MAC, et en déduire la probable usurpation de cette adresse par un attaquant.

Le document WO 03/093951 décrit un procédé de détection d'usurpation d'adresse dans un réseau sans fil où des informations statistiques des trames transmises sont analysées.

Cette technique nécessite la gestion de seuils très précis et délicats à positionner. Il est difficile de la mettre en oeuvre à elle seule et de s'assurer de l'absence de faux positifs (fausses alarmes) et de faux négatifs (attaques non détectées). La difficulté principale réside dans la gestion des pertes de paquets, par exemple lors d'une transmission à longue distance. En effet, certains paquets sont alors perdus, ce qui entraîne des problèmes de faux positifs car les numéros de séquence varient fortement d'un paquet à l'autre. Il est nécessaire de gérer les seuils de détection de manière très fine. C'est pourquoi cette technique est souvent insuffisante et doit être combinée avec une ou plusieurs autres afin de corréler les alarmes et d'avoir ainsi une confiance plus élevée dans les alarmes levées.

Un but de la présente invention est de répondre à cette problématique et plus généralement de proposer une nouvelle méthode de détection d'usurpation d'adresse dans un réseau sans fil de type IEEE 802.11 ou analogue.

L'invention propose ainsi un procédé de détection d'usurpation d'adresse dans un réseau sans fil, comprenant les étapes suivantes :
- obtenir des trames de gestion transmises sur le réseau sans fil, chaque trame de gestion comprenant une adresse d'un émetteur de la trame et un corps de trame contenant plusieurs champs d'information;
- analyser certains au moins des champs d'information contenus dans les corps de trame de plusieurs trames de gestion obtenues successivement et présentant une même adresse d'émetteur; et
- déclencher une alarme en cas de variation détectée de certains au moins des champs d'information analysés.

Le corps des trames de gestion IEEE 802.11 contient des informations sur les caractéristiques techniques des réseaux et des clients. Typiquement, un point d'accès informe son entourage du réseau auquel il appartient en diffusant notamment un nom de réseau et des informations de plus bas niveau comme le support des différents débits radio des cartes IEEE 802.11 (11 Mb/s, 22 Mb/s, 54 Mb/s, ...). Ces informations sont fournies par le contrôleur (driver) et ne peuvent être modifiées facilement par l'utilisateur sans modifications importantes de celui-ci. Il est donc intéressant d'analyser finement ces paramètres. Si une différence est relevée, on peut affirmer que deux équipements différents communiquent avec la même adresse MAC. En effet, certains de ces paramètres sont propres à la carte et à son driver et ne peuvent être modifiés facilement à la volée par un attaquant.

L'invention s'applique notamment aux trames dites Beacon et Probe Response, qui sont émises par les points d'accès. Mais elle peut aussi s'appliquer à d'autres types de trames telles que les Probe Request qui sont envoyées par les clients, même si les informations contenues dans les champs observés sont alors moins riches. L'invention s'apparente à un procédé de création de signature des cartes/drivers alimentant les champs analysés.

Dans des modes de réalisation du procédé:
- on détermine le nombre de champs d'information du corps de trame de chaque trame de gestion obtenue, et on déclenche une alarme si on observe une variation du nombre de champs d'information déterminé entre deux trames de gestion successivement obtenues;
- les champs d'information du corps de trame sont séparés en une première catégorie contenant des informations invariantes pour un émetteur et une seconde catégorie contenant des informations pouvant varier pour un émetteur, et une alarme est déclenchée en cas de variation détectée des informations contenues dans au moins un des champs d'information de la première catégorie;
- une chaîne numérique est construite à partir de certains au moins des champs d'information analysés pour une trame de gestion obtenue, une signature est calculée par hachage de ladite chaîne numérique, et une alarme est déclenchée en cas de variation entre les signatures calculées pour deux trames de gestion successivement obtenues;
- on détermine une statistique des informations contenues dans certains au moins des champs d'information du corps de trame de trames de gestion reçues d'un émetteur, et une alarme est déclenchée en cas d'observation d'au moins une trame de gestion contenant l'adresse dudit émetteur et un corps de trame ayant des champs d'information non concordants relativement à la statistique déterminée.

Un autre aspect de l'invention se rapporte à un programme d'ordinateur à installer dans un dispositif interfacé avec un réseau sans fil pour exécution par une unité de traitement de ce dispositif. Le programme comprend des instructions pour mettre en oeuvre un procédé tel que défini ci-dessus lors d'une exécution du programme par ladite unité de traitement.

Un autre aspect encore de l'invention se rapporte à un dispositif de détection d'usurpation d'adresse dans un réseau sans fil, comprenant:
- des moyens d'obtention de trames de gestion transmises sur le réseau sans fil, chaque trame de gestion comprenant une adresse d'un émetteur de la trame et un corps de trame contenant plusieurs champs d'information;
- des moyens d'analyse de certains au moins des champs d'information contenus dans plusieurs trames de gestion obtenues successivement et présentant une même adresse d'émetteur; et
- des moyens de déclenchement d'une alarme en cas de variation détectée de certains au moins des champs d'information analysés.

D'autres particularités et avantages de la présente invention apparaîtront dans la description ci-après d'exemples de réalisation non limitatifs, en référence aux dessins annexés, dans lesquels :
- la figure 1 est un schéma synoptique d'un dispositif de détection d'usurpation d'adresse selon l'invention;
- la figure 2 est un diagramme illustrant le contenu d'une trame de gestion IEEE 802.11; et
- les figures 3 et 4 sont des organigrammes d'exemples de procédés selon l'invention.

L'invention est décrite ci-après dans son application particulière à la détection d'usurpation d'adresse MAC dans un réseau sans fil de type IEEE 802.11.

Le procédé bien connu d'association d'un client IEEE 802.11 à un point d'accès est le suivant. Dans une phase de découverte du point d'accès, l'appareil client écoute la voie radio pour rechercher des trames spécifiques appelées balises ("Beacon"). Le client examine les informations contenues dans ce type de trame en particulier le nom de réseau (SSID, "Service Set Identifier") et les paramètres propres au réseau déployé. Ensuite, le client envoie des trames de recherche de points d'accès ("Probe Request") contenant le nom de réseau (SSID) recherché. Le ou les point(s) d'accès concerné(s) répond(ent) à la requête en renvoyant une trame "Probe Response" signalant leur présence. En fonction des éléments ainsi découverts, le client sélectionne le point d'accès voulu et demande à s'authentifier auprès de lui. Si l'authentification réussit, le client demande à s'associer auprès du point d'accès. Si l'association réussit, le client est capable d'envoyer et de recevoir des données via le point d'accès auquel il est connecté.

Lors de l'utilisation d'un point d'accès illégitime sur la voie radio, l'attaquant utilise généralement une technique d'usurpation complète du point d'accès: même nom de réseau (SSID), même adresse MAC. Mais il n'utilise généralement pas le même canal radio pour des questions d'interférences radio.

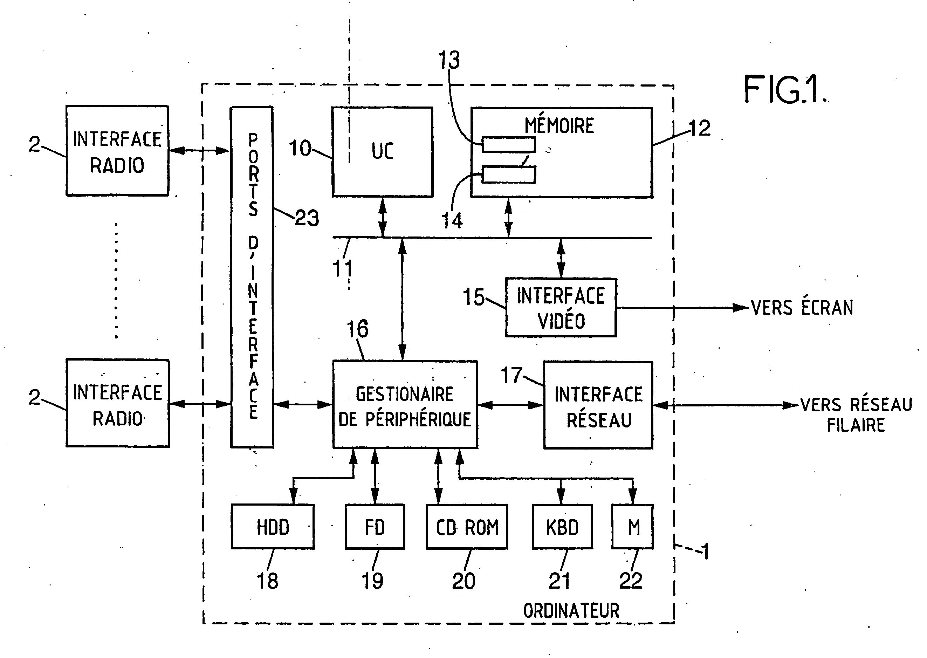

La détection de points d'accès illégitimes selon l'invention peut se faire à l'aide d'un ordinateur muni d'une interface radio conforme à l'une des couches physiques du standard IEEE 802.11 utilisant une liaison radio. Des couches physiques radio sont notamment définies par les standards IEEE 802.11a, IEEE 802.11b ou encore IEEE 802.11g. La figure 1 montre un exemple de dispositif de détection comprenant un ordinateur 1 relié à plusieurs interfaces radio 2.

L'ordinateur 1 est par exemple un ordinateur standard qui comporte une unité centrale de traitement 10 reliée à un bus 11. Une mémoire 12 qui peut comporter plusieurs circuits de mémoire est reliée au bus 11 pour coopérer avec l'unité centrale 10, la mémoire 12 servant à la fois de mémoire de données et de mémoire de programme. Des zones 13 et 14 sont prévues pour la mémorisation de trames de gestion 802.11 telles que des trames Beacon, des trames Probe Request ou des trames Probe Response. Une interface vidéo 15 peut être reliée au bus 11 afin d'afficher éventuellement des messages sur un écran pour un opérateur.

Un circuit de gestion des périphériques 16 est relié au bus 11 pour réaliser la liaison avec différents périphériques selon une technique connue. Parmi les périphériques qui peuvent être reliés au circuit de gestion de périphérique, seul les principaux sont représentés: une interface réseau 17 qui permet de communiquer avec un réseau filaire, un disque dur 18 pour les programmes et données, un lecteur de disquette 19, un lecteur de CDROM 20, un clavier 21, une souris 22 et des ports d'interface 23. Les ports 23 sont par exemple conformes au standard PCMCIA ou USB. L'un des programmes enregistrés sur le disque dur et chargeables dans la mémoire de travail de l'unité centrale 10 pour exécution sert à la détection des points d'accès (ou clients) illégitimes lorsque le dispositif est placé en écoute sur la voie radio. Un tel programme peut être écrit en tout langage approprié à partir des organigrammes décrits plus loin.

Une ou plusieurs interfaces radio 2 sont connectées aux ports d'interface 23. Les interfaces radio compatibles avec le standard IEEE 802.11 disposent de moyens radio permettant de n'écouter simultanément qu'un nombre réduit de canaux radio. Au besoin, notamment si on désire écouter la totalité de la bande de communication, on peut être amené à associer plusieurs interfaces 2 au dispositif 1.

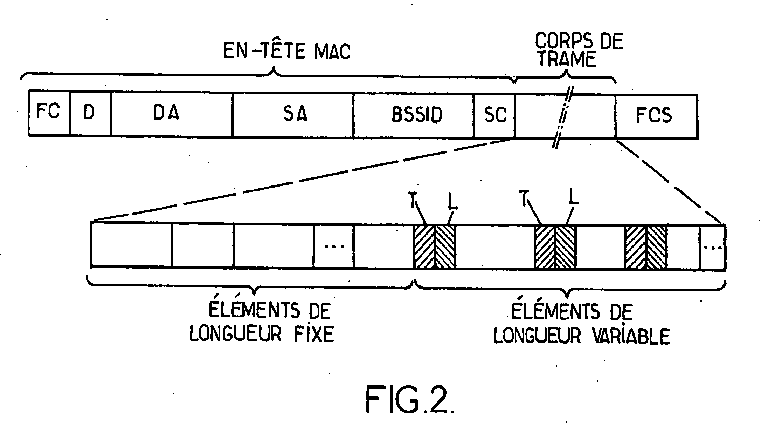

La figure 2 montre la structure classique d'une trame de gestion IEEE 802.11. Les trames de gestion incluent notamment les trames Beacon, des trames Probe Request et les trames Probe Response. Chacune comprend un en-tête de couche MAC, un corps de trame et une séquence de vérification de trame FCS, de quatre octets, servant au récepteur pour vérifier l'intégrité de la trame reçue.

L'en-tête MAC commence par deux octets de contrôle FC fournissant diverses indications. Les octets de contrôle incluent notamment deux bits de type dont la valeur 00 désigne une trame de gestion, et quatre bits de sous-type dont la valeur 1000 désigne une trame Beacon, la valeur 0100 désigne une trame Probe Request, la valeur 0101 désigne une trame Probe Response, etc. Un autre champ, de six octets, de l'en-tête MAC contient l'adresse MAC, appelée BSSID ("Basic Service Set Identifier") du point d'accès émetteur de la trame. Dans le cas d'une trame de gestion émise par un client, telle qu'une Probe Request, le champ d'adresse de source (SA) de six octets contient l'adresse MAC de ce client.

Le corps de trame d'une trame de gestion IEEE 802.11 inclut deux types d'éléments d'information: des éléments de longueur fixe placés au début du corps de trame et des éléments de longueur variable qui suivent. Les éléments de longueur fixe peuvent notamment comprendre:
- un horodatage de la trame ("timestamp") codé sur huit octets;
- un intervalle de balise ("beacon interval") codé sur deux octets et indiquant l'intervalle de temps entre deux émissions de trames Beacon par le point d'accès;
- des informations de capacité ("capability information") codées sur deux octets et indiquant si le réseau supporte ou non diverses fonctions prévues dans la norme; ...

Les éléments de longueur fixe présents dans une trame de gestion sont déterminés par le sous-type de la trame indiqué dans l'en-tête MAC, de sorte qu'ils peuvent être décodés par le récepteur. Par exemple, les trames Beacon et Probe Response comportent les champs "timestamp", "beacon interval" et "capability information" dans cet ordre, alors que les trames Probe Request ne contiennent pas d'éléments de longueur fixe dans leur corps de trame.

Chaque élément de longueur variable du corps de trame commence par un octet d'étiquette T qui désigne le type d'élément et par un octet de longueur L qui désigne le nombre d'octets sur lequel la valeur de l'élément est codée. La présence d'un élément de longueur variable dans une trame de gestion est détectée par le récepteur en examinant si un octet d'étiquette T se trouve après l'élément précédemment décodé. Les éléments de longueur variable, souvent optionnels, peuvent notamment comprendre:
- un nom de réseau correspondant au SSID;
- un champ "supported rates" qui indique les débits de transmission supportés par l'émetteur;
- un champ "DS parameter set" qui indique les jeux de paramètres utilisables par l'émetteur si la couche radio de type séquence directe est supportée;
- un champ "FH parameter set" qui indique les jeux de paramètres utilisables par l'émetteur si la couche radio à saut de fréquence est supportée;
- un champ "traffic indication map" qui désigne les clients ayant des informations en attente d'émission, afin de les avertir si elles sont en mode veille; ...

Certains des éléments d'information du corps de trame ont par nature des valeurs variables. C'est le cas des champs "timestamp" ou "traffic indication map". Un dispositif de détection selon l'invention mémorise une liste LV où sont classés ces éléments d'information variables. Le classement peut être effectué par l'opérateur du dispositif de détection grâce à la connaissance de l'infrastructure déployée.

Les autres éléments d'information sont généralement fixes, et leur modification peut être très difficile à effectuer, surtout dans le cas fréquent où les valeurs correspondantes résultent de la constitution matérielle de la carte radio. L'invention exploite cette propriété pour aider à la détection de l'usurpation éventuelle de l'adresse MAC d'un point d'accès ou d'une station.

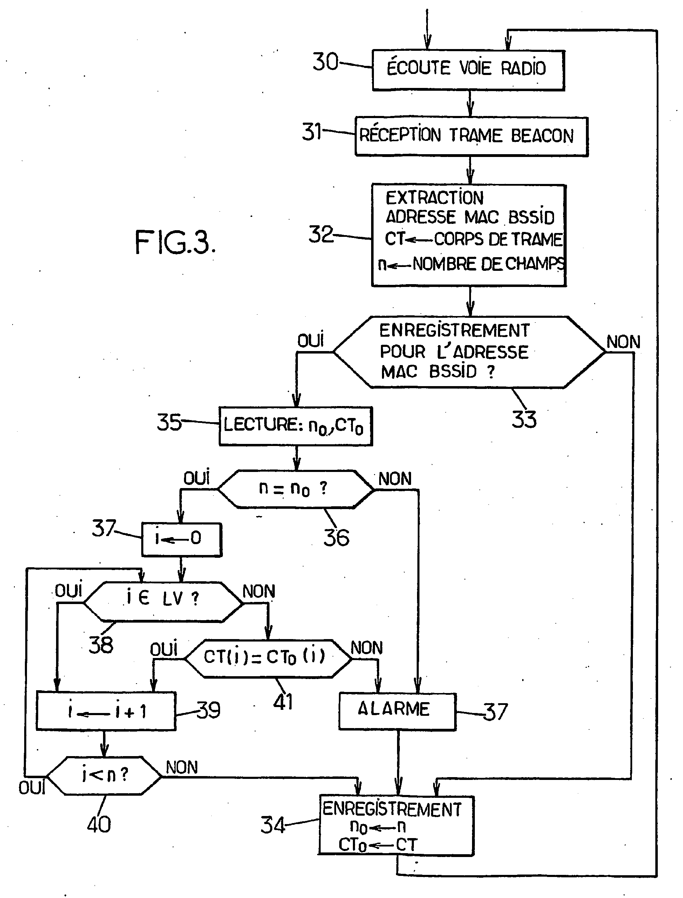

La figure 3 illustre un exemple d'organigramme d'un programme mettant en oeuvre la détection d'usurpation de point d'accès selon l'invention. Le procédé se fonde ici sur l'observation des trames Beacon captées sur la voie radio.

Le programme place le dispositif en écoute passive de la voie radio (étape 30). A réception 31 d'une trame détectée comme étant du sous-type Beacon d'après les octets de contrôle de l'en-tête MAC, on procède à l'étape 32 d'extraction de l'adresse MAC BSSID et des champs CT du corps de la trame reçue. On détermine également le nombre n de champs (de longueur fixe ou variable) du corps de trame. Si la mémoire du dispositif ne contient pas d'enregistrement valide relatif à une trame Beacon reçue avec l'adresse MAC BSSID extraite (étape 33), on effectue un tel enregistrement en mémoire pour la trame courante à l'étape 34. Dans l'exemple considéré ici, les données enregistrées en relation avec l'adresse MAC BSSID sont le nombre de champs n et les champs CT du corps de trame qui ont été obtenus à l'étape 32. Les valeurs enregistrées sont notées n₀ et CT₀. De préférence, la gestion de la mémoire peut être telle que l'enregistrement 34 n'est maintenu valide que pour une durée t définie par l'opérateur. Cette durée t est par exemple de l'ordre de la dizaine de secondes au maximum.

Si l'étape 33 révèle que la mémoire du dispositif contient un enregistrement valide pour l'adresse MAC BSSID, les valeurs enregistrées n₀, CT₀ sont lues à l'étape 35. Un premier test 36 est alors effectué en comparant le nombre n de champs du corps de la trame courante avec celui n₀ de la trame précédente. En l'absence d'usurpation, ces deux nombres sont en principe égaux. S'ils ne le sont pas, le procédé estime qu'une usurpation d'adresse MAC est probable, et il déclenche une alarme 37.

Si n = n₀ au test 36, les éléments d'information CT(0), CT(1), ..., CT(n-1) du corps de trame sont examinés successivement dans une boucle 37-41. L'index de boucle i est initialisé à 0 à l'étape 37. On examine à l'étape 38 si le champ de rang i se trouve dans la liste LV des champs dont les variations sont admises. Si c'est le cas, on passe simplement au champ suivant en incrémentant l'index i à l'étape 39, puis en le comparant à n à l'étape 40. Tant que i < n, la boucle revient à l'étape 38. Si le champ de rang i est de nature invariante, le second test 41 effectue la comparaison de son contenu CT(i) avec celui CT₀(i) qui lui correspond dans l'enregistrement fait pour la trame précédente. En cas d'égalité, on passe à l'incrémentation 39 de l'index de boucle i. En cas de différence sur la valeur du champ ou, dans le cas d'un champ de longueur variable, sur son octet d'étiquette ou de longueur, le procédé déclenche une alarme 37.

La boucle de vérification des champs se termine soit sur une alarme soit quand i atteint la valeur n à l'étape 40. Le processus se termine alors par l'enregistrement 34 des éléments relatifs à la trame courante avant de revenir à l'étape d'écoute 30.

L'alarme 37 signalée à l'opérateur du dispositif (typiquement l'administrateur du réseau sans fil) peut être accompagnée de données indiquant la cause de l'alarme, à savoir quel champ a montré une variation anormale ou le fait que le nombre de champs n a varié.

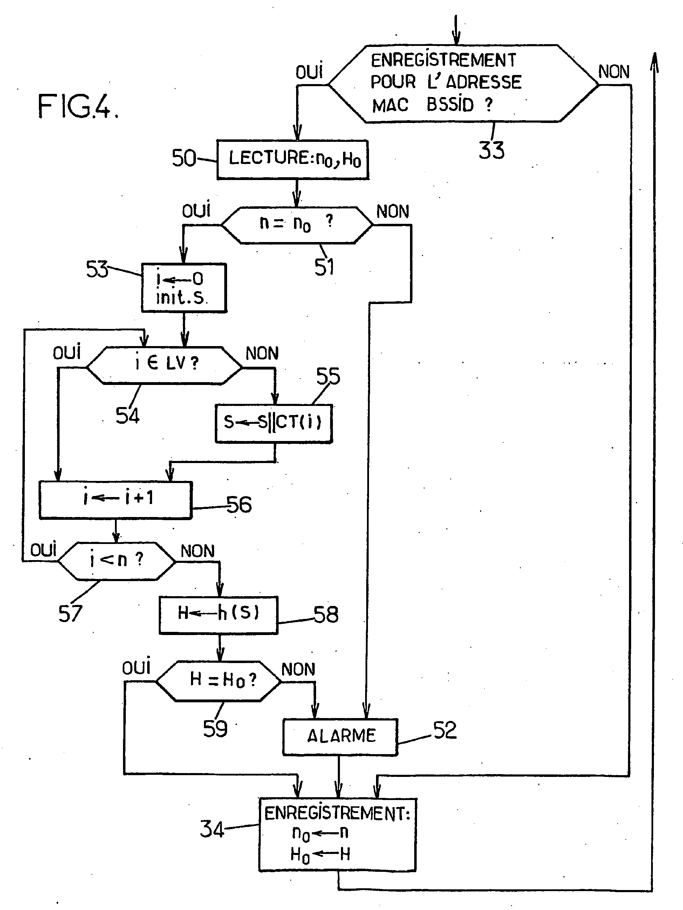

La figure 4 illustre, à partir de l'étape 33 précédemment décrite, une variante optimisée du procédé dans laquelle il n'est pas effectué une vérification bit à bit des champs d'information des trames analysées. On utilise une fonction cryptographique h de type fonction de hachage, par exemple SHA1 ou MD5 qui sont bien connues en cryptographie, afin de générer une signature sur p bits (p = 160 pour SHA1; p = 128 pour MD5) pour chaque trame analysée. La comparaison faite pour détecter une éventuelle usurpation d'adresse porte sur cette signature.

La signature générée pour la trame courante est notée H. Elle est enregistrée avec le nombre de champs n à l'étape 34. Quand l'étape 33 révèle un enregistrement valide pour l'adresse MAC BSSID, les valeurs enregistrées n₀, H₀ sont lues à l'étape 50. Un premier test 51 est alors effectué en comparant le nombre n de champs du corps de la trame courante avec celui n₀ de la trame précédente. Si ces deux nombres ne sont pas égaux, le procédé estime qu'une usurpation d'adresse MAC est probable, et il déclenche une alarme 52.

Si n = n₀ au test 51, la chaîne numérique S qui sera soumise à la fonction de hachage h est assemblée dans une boucle 53-57. L'index de boucle i est initialisé à 0 à l'étape 53, et la chaîne S est initialisée, par exemple à une chaîne vide. Si le champ de rang i se trouve dans la liste LV (étape 54), on passe simplement au champ suivant en incrémentant l'index i à l'étape 56, puis en le comparant à n à l'étape 57. Sinon, le contenu du champ i est concaténé à la fin de la chaîne S à l'étape 55 avant de passer à l'étape 56. Tant que i < n, la boucle revient à l'étape 54. Quand i atteint la valeur n à l'étape 57, la fonction de hachage est appliquée à la chaîne S à l'étape 58 pour générer la signature H de la trame courante.

Le test suivant 59 compare cette signature H à celle H₀ de la trame précédente. En cas d'identité des signatures, aucune alarme n'est déclenchée et l'enregistrement des données n, H est effectué à l'étape 34. Si H ≠ H₀, le procédé déclenche une alarme 52.

Le procédé illustré par la figure 3 ou 4 est aisément étendu à la surveillance des trames Probe Response. Comme ces trames ne sont envoyées que sur sollicitation de clients, il convient d'adapter leur stockage en mémoire de manière à conserver les informations pendant une durée t plus importante. Cette durée peut être adaptée en fonction de l'activité observée sur le réseau à protéger.

On remarque qu'il n'est pas nécessaire de faire l'hypothèse que l'écoute de la voie radio ne présente pas de pertes de trames. En effet, la comparaison est effectuée entre deux trames successives provenant d'une même adresse MAC (BSSID). Rien n'est imposé sur les pertes éventuelles de trames équivalentes entre la réception des deux trames analysées. Il suffit d'avoir deux trames pour les comparer entre elles, quelles que soient les trames perdues entre ces deux trames.

Lorsqu'une alarme 37, 52 est déclenchée, l'opérateur peut prendre toute mesure appropriée pour stopper l'attaque de l'usurpateur. Dans certains cas, une alarme pourra être déclenchée par le dispositif suite à une opération de reconfiguration du réseau par son administrateur, donnant lieu à certains changement de paramètres. Celui-ci saura alors que l'alarme ne témoigne vraisemblablement pas d'une usurpation d'adresse MAC.

Le procédé peut aussi s'appliquer en réalisant une étude statistique du contenu de plusieurs trames d'un même type (Beacon, Probe Response) incluant un même adresse MAC. On peut déterminer une moyenne des champs du corps de trame, et lever une alarme lorsque le contenu d'une trame courante s'écarte de cette moyenne au-delà d'un certain seuil. Cette réalisation évite d'avoir à gérer la distinction entre les champs normalement variables et les champs invariants du corps de trame. Le seuil de détection peut lui aussi dépendre de la statistique observée sur plusieurs trames, notamment de l'écart type. De façon générale, la détermination d'une statistique des informations contenues dans les champs d'information du corps de trame ou dans certains d'entre eux, permet de déclencher une alarme dès qu'on observe une trame avec des champs d'information non concordants relativement à la statistique déterminée.

Les procédés de détection décrits ci-dessus sont transposables à des trames de gestion autres que celles émises par les points d'accès. L'invention est notamment applicable aux trames émises par les clients telles que les Probe Request, bien que cela soit moins efficace du fait que ces trames comportent habituellement un plus petit nombre de champs invariants.

## Revendications

1. Procédé de détection d'usurpation d'adresse dans un réseau sans fil, comprenant les étapes suivantes :
- obtenir (31) des trames de gestion transmises sur le réseau sans fil, chaque trame de gestion comprenant une adresse d'un émetteur de la trame et un corps de trame contenant plusieurs champs d'information;
- analyser (35-41; 50-59) certains au moins des champs d'information contenus dans les corps de trame de plusieurs trames de gestion obtenues successivement et présentant une même adresse d'émetteur; et
- déclencher une alarme (37; 52) en cas de variation détectée de certains au moins des champs d'information analysés.

2. Procédé selon la revendication 1, dans lequel les champs d'information analysés sont extraits de trames de gestion d'au moins un type déterminé.

3. Procédé selon la revendication 2, dans lequel le réseau sans fil est de type IEEE 802.11 et lesdits types déterminés des trames de gestion sont compris dans les types Beacon, Probe Response et Probe Request.

4. Procédé selon l'une quelconque des revendications précédentes, dans lequel on détermine le nombre (n) de champs d'information du corps de trame de chaque trame de gestion obtenue, et dans lequel on déclenche une alarme si on observe une variation du nombre de champs d'information déterminé entre deux trames de gestion successivement obtenues.

5. Procédé selon l'une quelconque des revendications précédentes, dans lequel les champs d'information du corps de trame sont séparés en une première catégorie contenant des informations invariantes pour un émetteur et une seconde catégorie contenant des informations pouvant varier pour un émetteur, et dans lequel une alarme (37, 52) est déclenchée en cas de variation détectée des informations contenues dans au moins un des champs d'information de la première catégorie.

6. Procédé selon l'une quelconque des revendications précédentes, dans lequel une chaîne numérique est construite à partir de certains au moins des champs d'information analysés pour une trame de gestion obtenue, et une signature est calculée par hachage de ladite chaîne numérique, et dans lequel une alarme est déclenchée en cas de variation entre les signatures calculées pour deux trames de gestion successivement obtenues.

7. Procédé selon l'une quelconque des revendications 1 à 3, comprenant en outre la détermination d'une statistique des informations contenues dans certains au moins des champs d'information du corps de trame de trames de gestion reçues d'un émetteur, et dans lequel une alarme est déclenchée en cas d'observation d'au moins une trame de gestion contenant l'adresse dudit émetteur et un corps de trame ayant des champs d'information non concordants relativement à la statistique déterminée.

8. Dispositif de détection d'usurpation d'adresse dans un réseau sans fil, comprenant:
- des moyens d'obtention de trames de gestion transmises sur le réseau sans fil, chaque trame de gestion comprenant une adresse d'un émetteur de la trame et un corps de trame contenant plusieurs champs d'information;
- des moyens d'analyse de certains au moins des champs d'information contenus dans plusieurs trames de gestion obtenues successivement et présentant une même adresse d'émetteur; et
- des moyens de déclenchement d'une alarme en cas de variation détectée de certains au moins des champs d'information analysés.

9. Dispositif selon la revendication 8, dans lequel les moyens d'analyse comprennent des moyens pour déterminer le nombre de champs d'information du corps de trame de chaque trame de gestion obtenue, et dans lequel les moyens de déclenchement d'alarme sont activés en cas de variation du nombre de champs d'information déterminé entre deux trames de gestion successivement obtenues.

10. Dispositif selon la revendication 8 ou 9, dans lequel les moyens d'analyse séparent les champs d'information du corps de trame en une première catégorie contenant des informations invariantes pour un émetteur et une seconde catégorie contenant des informations pouvant varier pour un émetteur, et dans lequel les moyens de déclenchement d'alarme sont activés en cas de variation détectée des informations contenues dans au moins un des champs d'information de la première catégorie.

11. Programme d'ordinateur à installer dans un dispositif (1) interfacé avec au moins un réseau sans fil pour exécution par une unité de traitement (10) dudit dispositif, le programme comprenant des instructions pour mettre en oeuvre un procédé selon l'une quelconque des revendications 1 à 7 lors d'une exécution du programme par ladite unité de traitement.

## Claims

1. Method of detecting address spoofing in a wireless network, comprising the following steps:
- obtaining (31) management frames transmitted over the wireless network, each management frame comprising an address of a sender of the frame and a frame body containing several information fields;
- analysing (35-41; 50-59) at least some of the information fields contained in the frame bodies of several successively obtained management frames exhibiting one and the same sender address; and
- triggering an alarm (37; 52) in the event that a variation is detected in at least some of the analysed information fields.

2. Method according to Claim 1, in which the analysed information fields are extracted from management frames of at least one determined type.

3. Method according to Claim 2, in which the wireless network is of IEEE 802.11 type and said determined types of the management frames are from among the Beacon, Probe Response and Probe Request types.

4. Method according to any one of the preceding claims, in which the number (n) of information fields of the frame body of each management frame obtained is determined, and in which an alarm is triggered if the determined number of information fields is observed to vary between two successively obtained management frames.

5. Method according to any one of the preceding claims, in which the information fields of the frame body are separated into a first category containing information that is invariant for a sender and a second category containing information that can vary for a sender, and in which an alarm (37, 52) is triggered in the event that a variation is detected in the information contained in at least one of the information fields of the first category.

6. Method according to any one of the preceding claims, in which a numerical string is constructed on the basis of at least some of the analysed information fields for an obtained management frame, and a signature is calculated by hashing said numerical string, and in which an alarm is triggered in the event that there is a variation between the signatures calculated for two successively obtained management frames.

7. Method according to any one of Claims 1 to 3, furthermore comprising the determination of a statistic regarding the information contained in at least some of the information fields of the frame body of management frames received from a sender, and in which an alarm is triggered in the event of observing at least one management frame containing the address of said sender and a frame body having information fields that are inconsistent in relation to the statistic determined.

8. Device for detecting address spoofing in a wireless network, comprising:
- means for obtaining management frames transmitted over the wireless network, each management frame comprising an address of a sender of the frame and a frame body containing several information fields;
- means for analysing at least some of the information fields contained in several successively obtained management frames exhibiting one and the same sender address; and
- means for triggering an alarm in the event that a variation is detected in at least some of the analysed information fields.

9. Device according to Claim 8, in which the analysis means comprise means for determining the number of information fields of the frame body of each management frame obtained, and in which the means for triggering an alarm are activated in the event that the number of information fields determined varies between two successively obtained management frames.

10. Device according to Claim 8 or 9, in which the analysis means separate the information fields of the frame body into a first category containing information that is invariant for a sender and a second category containing information that can vary for a sender, and in which the means for triggering an alarm are activated in the event that a variation is detected in the information contained in at least one of the information fields of the first category.

11. Computer program to be installed in a device (1) interfaced with at least one wireless network for execution by a processing unit (10) of said device, the program comprising instructions for implementing a method according to any one of Claims 1 to 7 during execution of the program by said processing unit.

## Patentansprüche

1. Verfahren zur Erfassung von IP-Spoofing in einem drahtlosen Netzwerk, das die folgenden Schritte aufweist:
- Erhalten (31) der über das drahtlose Netzwerk übertragenen Verwaltungsrahmen, wobei jeder Verwaltungsrahmen eine Adresse eines Senders des Rahmens und einen Rahmenkörper aufweist, der mehrere Informationsfelder enthält;
- Analyse (35-41; 50-59) zumindest bestimmter der in den Rahmenkörpern von mehreren Verwaltungsrahmen, die nacheinander erhalten werden und alle die gleiche Senderadresse haben, enthaltenen Informationsfelder; und
- Auslösen eines Alarms (37; 52) im Fall einer erfassten Änderung zumindest bestimmter der analysierten Informationsfelder.

2. Verfahren nach Anspruch 1, bei dem die analysierten Informationsfelder aus Verwaltungsrahmen mindestens eines bestimmten Typs entnommen werden.

3. Verfahren nach Anspruch 2, bei dem das drahtlose Netzwerk vom Typ IEEE 802.11 ist, und die bestimmten Typen der Verwaltungsrahmen in den Typen Beacon, Probe Response und Probe Request enthalten sind.

4. Verfahren nach einem der vorhergehenden Ansprüche, bei dem die Anzahl (n) von Informationsfeldern des Rahmenkörpers jedes erhaltenen Verwaltungsrahmens bestimmt wird, und bei dem ein Alarm ausgelöst wird, wenn eine Änderung der bestimmten Anzahl von Informationsfeldern zwischen zwei nacheinander erhaltenen Verwaltungsrahmen beobachtet wird.

5. Verfahren nach einem der vorhergehenden Ansprüche, bei dem die Informationsfelder des Rahmenkörpers in eine erste Kategorie, die unveränderliche Informationen für einen Sender enthält, und eine zweite Kategorie getrennt werden, die veränderliche Informationen für einen Sender enthält, und bei dem im Fall einer erfassten Änderung der in mindestens einem der Informationsfelder der ersten Kategorie enthaltenen Informationen ein Alarm (37, 52) ausgelöst wird.

6. Verfahren nach einem der vorhergehenden Ansprüche, bei dem eine Ziffernfolge ausgehend von mindestens bestimmten der analysierten Informationsfelder für einen erhaltenen Verwaltungsrahmen konstruiert wird, und eine Signatur durch Zerhacken der Ziffernfolge berechnet wird, und bei dem im Fall einer Änderung zwischen den für zwei nacheinander erhaltene Verwaltungsrahmen berechneten Signaturen ein Alarm ausgelöst wird.

7. Verfahren nach einem der Ansprüche 1 bis 3, das weiter die Bestimmung einer Statistik der in mindestens bestimmten der Informationsfelder des Rahmenkörpers von von einem Sender empfangenen Verwaltungsrahmen enthaltenen Informationen aufweist, und bei dem im Fall der Beobachtung mindestens eines Verwaltungsrahmens, der die Adresse des Senders und einen Rahmenkörper enthält, der bezüglich der bestimmten Statistik nicht übereinstimmende Informationsfelder hat, ein Alarm ausgelöst wird.

8. Vorrichtung zur Erfassung von IP-Spoofing in einem drahtlosen Netzwerk, die aufweist:
- Mittel zum Erhalt von Verwaltungsrahmen, die über das drahtlose Netzwerk übertragen werden, wobei jeder Verwaltungsrahmen eine Adresse eines Senders des Rahmens und einen Rahmenkörper aufweist, der mehrere Informationsfelder enthält;
- Mittel zur Analyse mindestens bestimmter der in mehreren nacheinander erhaltenen und die gleiche Senderadresse aufweisenden Verwaltungsrahmen enthaltenen Informationsfelder; und
- Mittel zum Auslösen eines Alarms im Fall einer erfassten Änderung mindestens bestimmter der analysierten Informationsfelder.

9. Vorrichtung nach Anspruch 8, bei der die Analysemittel Mittel aufweisen, um die Anzahl von Informationsfeldern des Rahmenkörpers jedes erhaltenen Verwaltungsrahmens zu bestimmen, und bei der die Alarmauslösemittel im Fall einer Änderung der bestimmten Anzahl von Informationsfeldern zwischen zwei nacheinander erhaltenen Verwaltungsrahmen aktiviert werden.

10. Vorrichtung nach Anspruch 8 oder 9, bei der die Analysemittel die Informationsfelder des Rahmenkörpers in eine erste Kategorie, die unveränderliche Informationen für einen Sender enthält, und in eine zweite Kategorie trennen, die veränderliche Informationen für einen Sender enthält, und bei der die Alarmauslösemittel im Fall einer erfassten Änderung der in mindestens einem der Informationsfelder der ersten Kategorie enthaltenen Informationen aktiviert werden.

11. Computerprogramm, das in einer Vorrichtung (1) zu installieren ist, die für seine Ausführung durch eine Verarbeitungseinheit (10) der Vorrichtung mit mindestens einem drahtlosen Netzwerk kommuniziert, wobei das Programm Anweisungen enthält, um bei einer Ausführung des Programms durch die Verarbeitungseinheit ein Verfahren nach einem der Ansprüche 1 bis 7 anzuwenden.
